# EUROPÄISCHE PATENTSCHRIFT

(11) **EP 0 703 030 B1**
(45) Veröffentlichungstag und Bekanntmachung des Hinweises auf die Patenterteilung: **11.10.2000**
(21) Anmeldenummer: 95110935.4
(22) Anmeldetag: 12.07.1995
(51) Int. Cl.: B23B 29/034

(54) **Rundlaufendes Werkzeug**
Rotary tool
Outil rotatif

(30) Priorität: 25.08.1994 DE 4430197
(43) Veröffentlichungstag der Anmeldung: 27.03.1996
(73) Patentinhaber: GÜHRING, Jörg, D-72458 Albstadt (DE)
(72) Erfinder: Reinauer, Josef, D-72488 Sigmaringen (DE)
(74) Vertreter: Winter, Brandl, Fürniss, Hübner, Röss, Kaiser, Polte Partnerschaft

(56) Entgegenhaltungen:
- FR-A- 2 125 227
- US-A- 2 266 339
- US-A- 4 428 704

## Beschreibung

Die vorliegende Erfindung betrifft ein rundlaufendes Werkzeug, insbesondere ein spanabhebendes Werkzeug zur Feinbearbeitung von Innenoberflächen, mit einem Schneidenträger und daran vorzugsweise lösbar befestigten Schneideinsätzen, insbesondere DIN-Wendeschneidplatten, wobei eine Einstellvorrichtung zur Feinjustierung der Schneidkante vorgesehen ist.

In der heutigen modernen Fertigungstechnik ist die Verringerung der Bearbeitungsschritte vom Rohteil bis zum fertigen Produkt in Feinbearbeitungsqualität ein wichtiger Punkt zur Kostenoptimierung und Zeitersparnis. Schnelldrehende, stabile Hochleistungsspindeln schaffen neue Möglichkeiten für neue rundlaufende Werkzeugsysteme. Insbesondere die Bearbeitung von Durchgangsöffnungen oder Sacklochbohrungen, wie beispielsweise Zylinderkopfbohrungen, fordert ein hohes Maß an Rundlaufgenauigkeit des Werkzeuges und Zylindrizität der bearbeiteten Durchgangsöffnungen. In solchen Werkzeugen werden deshalb auch häufig extrem standfeste Schneideinsätze verwendet.

Hierfür ist ein rundlaufendes Werkzeug bekannt, an dessen Schneidenträger Schneideinsätze mit Hilfe einer Einstellvorrichtung radial ausgerichtet werden können. Die Einstellvorrichtung besteht aus einer Klemmpratze, die mit einer Spannschraube am Schneidenträger fixiert werden kann, um den Schneideinsatz, der z.B. aus Hartmetall besteht, am Schneidenträger zu befestigen und einer Justierschraube zum radialen Ausrichten des Schneideinsatzes bzw. der Schneide. Die Klemmpratze ist dabei in den Spanraum versenkbar. Die Schneideinsätze weisen an ihrer Oberseite eine geschliffene Verzahnung auf, in welche eine gleiche Verzahnung auf der Unterseite der Klemmpratze eingreift. Die Verzahnung verläuft parallel zur Hauptschneide, so daß bei einer radialen Verschiebung der Schneide zur Durchmessereinstellung die Verzahnung der Klemmpratze mit der Verzahnung der Schneide in Eingriff bleibt. Die Justierschraube ist schräg zur Spannschraube der Klemmpratze in einer Ebene parallel zur Stirnfläche des Werkzeuges angeordnet und an ihrer Spitze kegelförmig ausgestaltet, so daß die Kegelflanke der Justierschraube auf die innere seitliche Fläche der Schneide wirken kann, um die Schneide beim Justieren radial nach außen zu drücken.

Ein wesentlicher Nachteil dieses Werkzeugs ist jedoch, daß speziell zugeschliffene Schneideinsätze mit einer entsprechend präzisionsgeschliffenen Verzahnung an ihrer Oberseite verwendet werden müssen. Der Einsatz von beliebigen Schneideinsätzen, wie beispielsweise von kostengünstigen DIN- oder ISO-Wendeplatten ist mit dem bekannten Werkzeug nicht möglich.

Ein weiterer Nachteil liegt darin, daß die Justierschraube nur Kräfte aufbringen kann, welche die Schneide radial nach außen verschieben. Ist nun beim Einstellen des Durchmessers eine Verrückung der Schneide radial nach Innen erforderich, so muß dies von Hand durch Druck auf die äußere seitliche Schneidenfläche geschehen, was ein nicht unerhebliches Verletzungsrisiko bedeutet.

Um die Schneide am Schneidenträger fixieren zu können, muß außerdem eine präzise gefertigte Klemmpratze mit einer Verzahnung an ihrer Unterseite verwendet werden. Dies erhöht die erforderliche Anzahl von Teilen, die zum Zusammenbau des ganzen Werkzeuges benötigt werden. Ein einfaches Festklemmen der Schneide mit einer Schraube, wie dies bei herkömmlichen DIN-Wendeplatten der Fall ist, ist mit diesem Werkzeug nicht möglich. Zudem muß darauf geachtet werden, daß sich in der Verzahnung der Klemmpratze bzw. in der Verzahnung der Schneide keine Schmutzpartikel befinden, da sonst eine genaue Ausrichtung der Schneide erschwert ist.

Die Handhabung bei der Einstellung der Schneide bei diesem Werkzeug ist ebenfalls problematisch, da zum Justieren der Schneide die Spannschraube der Klemmpratze von Vorne mit Blick auf die Schenide gelöst werden muß und die Justierschraube von schräg gegenüber angetrieben werden muß. Das hierfür erforderliche ständige Hin- und Herbewegen des Werkzeuges erschwert ein genaue radiale Justierung der Schneideinsätze.

Weiterhin wirkt sich bei dem bekannten Werkzeug nachteilig aus, daß die Justierschraube die Schneide nur gegen eine Verrücken radial nach Innen sichert. Ein Verrutschen der Schneide radial nach außen soll durch die Klemmkraft der Klemmpratze verhindert werden, garantiert ist dies aber nicht.

Aus dem Dokument US-A-2,266,339 ist ein Werkzeug gemäß dem Oberbegriff des Patentanspruches 1 bekannt.

Aufgabe der Erfindung ist es, ein rundlaufendes Werkzeug dieser Art zu schaffen, das nach wie vor eine Trennung der beiden Funktionen Festklemmen der Schneide einerseits und Justieren der Schneide andererseits derart ermöglicht, so daß selbst standardisierte Schneideinsätze mit vorbestimmten toleranzbedingten Maßabweichungen verwendet werden können und eine dauernde Stabilisierung der Schneide sichergestellt ist.

Die Lösung dieser Aufgabe erfolgt durch die kennzeichnenden Merkmale des Anspruchs 1.

Die Trennung des Schneidenträgers in den Schneidenträger selbst und in wenigstens ein Schneidenträgersegment, welches die Schneide trägt, ermöglicht die Trennung wesentlicher Funktionen des Schneidenträgers, nämlich in eine erste Funktion, der Bereitstellung eines festen Sitzes für die Schneide, und eine zweite Funktion, der Justierung der Schneide in radialer Richtung. Damit ist es weiterhin möglich, die Schneide am Schneidenträger fest zu fixieren, ohne sich dabei in der Justiermöglichkeit beschränken zu müssen. Die Schlitzanordnung, die den Schneidenträger vom zumindest einen Schneidenträgersegment trennend abgrenzt, wobei das Schneidenträgersegment immer noch einstückig mit dem Schneidenträger verbunden bleibt, schafft einen neuen Freiheitsgrad, der zur Justierung der fest am Schneidenträgersegment fixierten Schneide dienen kann. Erfindungsgemäß wird somit nicht der Schneideinsatz, sondern ein Bestandteil des Schneidenträgers über die Variation der Schlitzbreite verstellt.

Die Einstell- und Fixiervorrichtung stabilisiert die einmal justierte Schneidkante indirekt durch die Stabilisierung des Schneidenträgersegments gegenüber dem Schneidenträger. Da der Schneidenträger und das Schneidenträgersegment einstückig miteinander verbunden bleiben, kann vorteilhaft eine große Teilevielfalt von vornherein vermieden werden. Zudem entfällt grundsätzlich die Montage von Befestigungsschrauben für das Schneidenträgersegment, wobei sich der zusätzliche Vorteil ergibt, daß zwischen Schneide und Schneidenträger ein Minimum an Bauteilen geschaltet ist, was der Stabilität des Werkzeugs zugute kommt.

Weiterhin können statt der mit einer Schraube am Schneidenträgersegment fixierten Schneideinsätze auch Schneidplatten verwendet werden, die am Schneidenträgersegment in ihrem Sitz aufgelötet werden, wodurch die Teileanzahl nochmals verringerbar ist. Je nach Anwendungsfall können ein oder mehrere beispielsweise sternförmig angeordnete Schlitze ein oder mehrere sternförmig angeordnete Schneidenträgersegmente erzeugen, deren zusätzlich gewonnene Elastizitäten bzw. Freiheitsgrade voneinander entkoppelbar sind.

Weil erfindungsgemäß zwei Schlitze vorgesehen sind, so daß das Schneidenträgersegment über einen, zwischen den beiden Schlitzen verbleibenden Materialsteg einstückig mit dem Schneidenträger verbunden ist, ergibt sich vorteilhaft die Einstellung des die Schneide tragenden Schneidenträgersegments nach Art einer Schaukel bzw. Wippe. Diese Wippe kann auf beiden Seiten oder nur auf einer Seite des Materialstegs abgesützt und damit zur Ruhe gebracht werden. Somit ergeben sich zwei Grundsysteme, wobei das eine mit einem in seinem mittleren Bereich gelagerten Biegebalken, an dessen beiden Endabschnitten Zug- bzw. Schubkräfte angreifen und das andere mit einem in seinem mittleren Bereich gelagerten Biegebalken, an dessen einem Endabschnitt Zug- und Schubkräften angreifen, vergleichbar ist. Auch diese beiden Grundsysteme sind jeweils wiederum statisch bestimmt und bleiben in Ruhe, so daß im übertragenen Sinn die mittels der beiden entgegengesetzten Kraftvektoren justierte Schneide andauernd stabilisiert ist. Die Wirkungsrichtung der zueinander entgegengesetzt wirkenden Kraftvektoren ist dabei umkehrbar. Vorteilhaft können hier bei bekannten Materialkonstanten sämtiche im Werkzeug auftretenden Kräfte berechnet werden, wie beisielsweise Schub-, Zug-, Scher- und Querkräfte, um das Werkzeug Zwecks Optimierung einer numerischen Simulation zugänglich zu machen.

Der Materialsteg, über den der Schneidenträger mit dem Schneidenträgersegment verbunden bleibt, bildet ein zwischen dem Schneidenträgersegment und dem Schneidenträger verbleibendes Material-Gelenk, welches mittels zweier gegengerichteter Kraftvektoren stabilisierbar ist. Dadurch werden die Spannungen im Schneidenträger beherrschbar. Die Wirkungsrichtung der zueinander entgegengesetzt wirkenden Kraftvektoren ist dabei umkehrbar. Vorteilhaft können hier bei bekannten Materialkonstanten sämtiche im Werkzeug auftretenden Kräfte berechnet werden, wie beisielsweise Schub, Zug-, Scher- und Querkräfte, um das Werkzeug Zwecks Optimierung einer numerischen Simulation zugänglich zu machen.

Verläuft der zumindest eine Schlitz gemäß Anspruch 2 geradlinig in einer zur Achse des Bohrwerkzeuges im wesentlichen parallelen Ebene, so kann wenigstens ein Schneidenträgersegment gebildet werden, das in einer der Werkzeugstirnseite gegenüberliegenden Ebene im Bereich des Schlitzgrundes einstückig mit dem Schneidenträger verbunden bleibt. Das so gebildete Schneidenträgersegment kann numerisch wie ein freikragender Biegebalken betrachtet werden, und ist daher üblichen Berechnungsverfahren zur Bestimmung von Lasten einfach zugänglich. Ein weiterer Vorteil ist dabei, daß ein so gebildetes Schneidenträgersegment einfach zu stabilisieren ist und bereits eine verhältnismäßig große Kraftübertragungsfläche zum Schneidenträger aufweist, damit problemlos große Schnittkräfte übertragen werden können.

Weist die Einstellvorrichtung gemäß Anspruch 3 zumindest ein Justierelement und ein Fixierelement auf, so ist für den Anwender eindeutig erkennbar, mit welchen Mitteln er die Schneide in radialer Richtung zu justieren und mit welchen Mitteln er die justierte Schneide in ihrer Lage zu stabilisieren hat. Dabei kann das Justierelement dem einen Kraftvektor und das Fixierelement dem anderen Kraftvektor zugeordnet sein.

Gemäß Anspruch 4 ist die Einstell- und Fixiervorrichtung von einem Paar parallel angeordneter und axial gestaffelter Stellglieder gebildet, deren Achsen vorzugsweise senkrecht zum Schlitz verlaufen. Somit kann jeweils einem der zueinander entgegengesetzt wirkenden Kraftvektoren ein Stellglied zugeordnet werden. Mit Hilfe der Stellglieder ist eine sehr feine und genaue Justierung der am Schneidenträgersegment fixierten Schneide in radialer Richtung möglich. Der Zugang zu den Stellgliedern ist bezogen auf die Schneidkante von zwei Seiten möglich, wobei die Funktionsweise beidseitig die selbe bleiben kann. Bei entsprechender Ausbildung kann der Zugang zu den Stellgliedern für deren Betätigung beispielsweise von vorne mit Sicht auf den Schneideinsatz vorgesehen werden, so daß eine ständige optische bzw. meßtechnische Kontrolle des Justiervorgangs ermöglicht wird, so daß eine äußerst präzise Justierung des Schneideinsatzes im µ-Bereich durchführbar ist.

Werden die Stellglieder gemäß Anspruch 5 von Schrauben/Mutter-Spanneinrichtungen gebildet, so ergibt sich eine besonders platzsparende Ausführungsform, die bei entsprechender Wahl der Gewindegänge eine äußerst feine Untersetzung ermöglichen kann, damit µ-genaue Einstellungen des Schneideinsatzes relativ einfach realisierbar sind. Je nach Wahl des Gewindesinnes, erfolgt beispielsweise bei Rechtsdrehung, unabhängig davon ob der Zugang zu den Stellgliedern von vorne oder von hinten vorgesehen ist, eine Zustellung des Schneidenträgersegments und damit des Schneideinsaztes ins Plus bzw. der Durchmesser wird vergrößert. Bei Linksdrehung ist es entsprechend umgekehrt, der Durchmesser wird kleiner. Da immer beide Stellglieder unter Spannung gehalten werden ist sichergestellt, daß die einmal eingestellte Position des Schneideinsatzes beibehalten und im Einsatz bei der Bearbeitung von Werkstücken nicht verstellt wird. Die Spanneinrichtungen können dabei querschnittsmäßig so groß ausgebildet werden, daß die Schwächung des Schneidenträgers durch den Schlitz weitestgehend kompensiert ist.

Die Schrauben-/Mutter-Spanneinrichtungen sind nach Anspruch 6 nach dem Differentialgewindeprinzip aufgebaut. Dies bietet den Vorteil, daß mit einer relativ kleinen Antriebskraft, die beispielsweise von Hand aufgebracht werden kann, ein relativ große Abtriebskraft erzielt werden kann.

Gemäß Anspruch 7 ist die Schrauben-/Mutter-Spanneinrichtungen zweiteilig aus einem Gewindestift und einer Gewindehülse gebildet. Damit ist vorteilhaft eine einfache und kostengünstige Verwendung von handelsüblichen Gewindestiften und Gewindehülsen möglich. Bei dieser Variante kann in Abhängigkeit von der Werkzeuggeometrie und der Breite des Schlitzes ein Verstellbereich des Durchmessers von wenigstens ± 0,2 mm, d.h. pro Schneideinsatz eine radiale Verschiebung um wenigstens ± 0,1 mm und mehr problemlos erzielt werden.

Gemäß Anspruch 8 ist die Schrauben-/Mutter-Spanneinrichtungen zweiteilig aus einem gestuften Gewindestift und einer Gewindehülse gebildet. Der Vorzug dieser Variante II gegenüber der in Anspruch 7 beanspruchten Variante I besteht hauptsächlich darin, daß die Herstellung und die Montage der Einstellvorrichtung zur Verstellung der Schneiden noch weiter vereinfacht werden kann. Für die Herstellung ist ein durchgehendes Gewinde G1' im Schneidenträger und im durch den Schlitz vom Schneidenträger getrennten Schneidenträgersegment ausreichend. In eine solche Durchgangsgewindebohrung wird die vormontierte Schrauben-/Mutter-Spanneinrichtungs-Einheit aus dem gestuften Gewindestift mit einem größeren Gewinde G1 und einem kleineren Gewinde G2 sowie einer Gewindehülse, die ein Innengewinde des Typs G2 und Außengewinde G1 hat, eingebracht. Montiert wird diese Vormontageeinheit in einem Zustand, in dem die Gewindehülse mit einem gewissen axialen Restspiel auf das kleinere Gewinde G2 der Stufenschraube aufgeschraubt ist. In diesem vormontierten Zustand kann diese Vormontageeinheit in die Druchgangsgewindebohrung des Werkzeugs eingeschraubt werden, zunächst so lange, bis eine der Komponenten auf das später erreichte Innengewinde aufläuft. Nun wird durch Relativverdrehung zwischen Gewindehülse und gestufem Gewindestift Gleichgang des später einlaufenden Außengewindeabschnitts mit dem Innengewinde hergestellt, woraufhin beide Elemente (Gewindehülse, gestufer Gewindestift) vorzugsweise durch Ansetzen geeigneter Werkzeuge (Innensechskantschlüssel) synchron in der Gewindebohrung weitergedreht werden, bis die geeignete Endposition (kraftfrei) der Vormontageeinheit in der Gewindebohrung erzielt ist.

Die Besonderheit besteht nun darin, daß unabhängig davon, welches Bauteil der Vormontageeinheit angetrieben wird, automatisch das andere Bauteil durch das größere Reibmoment (größerer Gewindedurchmesser) in Ruhe gehalten wird, so daß das angetriebene Bauteil relativ zum feststehenden Bauteil gedreht wird. Bedingt durch den Steigungsunterschied zwischen dem Gewindeabschnitten G1 und G2 (entsprechendes gilt hier auch für die Gewindeabschnitte G1 und G2 gemäß Anspruch 7) ergibt sich bei der Drehantriebsbewegung des einen Bauteils eine Relativverschiebung der durch den Schlitz getrennten Abschnitte des Schneidenträgerteils. Bei Vorsehen eines Rechtsgewindes an den Abschnitten G1 und G2 ergibt sich bei Drehen der Komponenten im Uhrzeigersinn ein Abstoßen der durch den Schlitz getrennten Abschnitte des Schneidenträgerteils, bei einer Drehantriebsbewegung im Gegenuhrzeigersinn, ein aufeinander Zubewegen, d. h. ein Anziehen. Damit läßt sich der Durchmesser, auf den die Schneiden befindlich sind, nicht nur ins Positiv drücken, sondern auch in die entgegengesetzte Richtung nach innen ziehen. Praktisch ausgeführt ist bereits ein Werkzeug, mit dem Durchmesserverstellungen im Bereich von 0,3 mm erzielbar sind.

Ein zusätzlicher Vorteil dieser Variante II liegt noch darin, daß die Einstellung der Schneide von beiden Seiten der Schrauben-/Mutter-Spanneinrichtung möglich ist. Man kann deshalb nunmehr die Schneide, die es zu verstellen gilt, von der Seite beobachten, von der das Verstellwerkzeug angesetzt wird.

Die beiden Schlitze liegen gemäß Anspruch 9 wenigstens teilweise in einer gemeinsamen Ebene, wobei jedem Schlitz eine Einstellvorrichtung zugeordnet ist. Durch die vorteilhafte Anordnung der Wirkungslinien der entgegengesetzt wirkenden Kraftvektoren beiderseits des Materialstegs ergibt sich, bildlich gesprochen, eine Art Schaukel bzw. Wippe. Diese Wippe kann durch das Abstützen auf beiden Seiten des Materialsteges zur Ruhe gebracht werden, d.h. das Schneidenträgersegment mit dem Schneideinsatz kann damit sehr präzise justiert und stabilisiert werden.

Der Materialsteg weist gemäß Anspruch 10 eine Querschnittsfläche auf, deren größere Erstreckung in Umfangsrichtung orientiert ist. Damit ist vorteilhaft sichergestellt, daß der Widerstand gegen Biegung des Materialstegs um eine in radialer Richtung orientierte Achse erheblich kleiner ist als um eine in Werkzeuglängsachse orientierte Achse. Der Querschnitt ist dabei so orientiert, daß die Hauptschnittkräfte an der Schneide im wesentlichen parallel zur größeren Erstreckung des Querschnitts, d.h. in Umfangsrichtung verlaufen.

Die Unteransprüche 11 bis 14 haben weitere vorteilhafte Ausführungsformen des Erfindungsgegenstandes zum Inhalt.

Über die Differenz der Gewindesteigungen läßt sich die Kraftübersetzung in vorteilhafter Weise auf den verbleibenden Materialsteg abstimmen. Die Lage des Materialstegs wird vorzugsweise so gelegt, daß die Haupt-Schnittkräfte an einem günstigen Punkt von der Schneide über das Schneidenträgersegment in den Schneidenträger eingeleitet werden können.

Ein Hauptanwendungsgebiet der Neuerung ist das Gebiet der Werkzeuge, die sog. DIN- oder ISO-Wendeplatten verwenden, die regelmäßg mit einem gewissen Toleranzbereich gefertigt sind, so daß sich oftmals nicht ohne irgendwelche Zusatzmaßnahmnen die gewünschten Genauigkeiten einstellen lassen. Ein weiterer Vorteil der Neuerung ist noch darin zu sehen, daß sich diese Technik auch für Werkzeuge anbietet, die fest eingelötete Schneiden haben und nachträglich auf das Funktionsprinzip umgerüstet werden.

Eine mögliche beispielhafte Ausführungsform des erfindungsgemäßen Werkzeugs ist nachfolgend Anhand der Zeichnung näher erläutert.

Es zeigen:
Fig. 1 eine dreidimensionale schematisch vereinfachte Ansicht des erfindungsgemäßen Werkzeugs;
Fig. 2 eine Seitenansicht einer ersten Ausführungsform des erfindungsgemäßen Werkzeugs mit einem Ausbruch;
Fig. 3 eine Frontansicht der ersten Ausführungsform des erfindungsgemäßen Werkzeugs mit einem Ausbruch;
Fig. 4 eine Frontansicht einer zweiten Ausführungsform des erfindungsgemäßen Werkzeugs mit einem Ausbruch;
Fig. 5 eine Seitenansicht der zweiten Ausführungsform des erfindungsgemäßen Werkzeugs; und
Fig. 6 einen schematischen Ablaufplan beim teilweisen Zusammenbau des erfindungsgemäßen Werkzeugs.

In den Figuren sind für Bauelemente unterschiedlicher Ausführungsformen, die einander jedoch funktional entsprechen, identische Bezugszeichen verwendet.

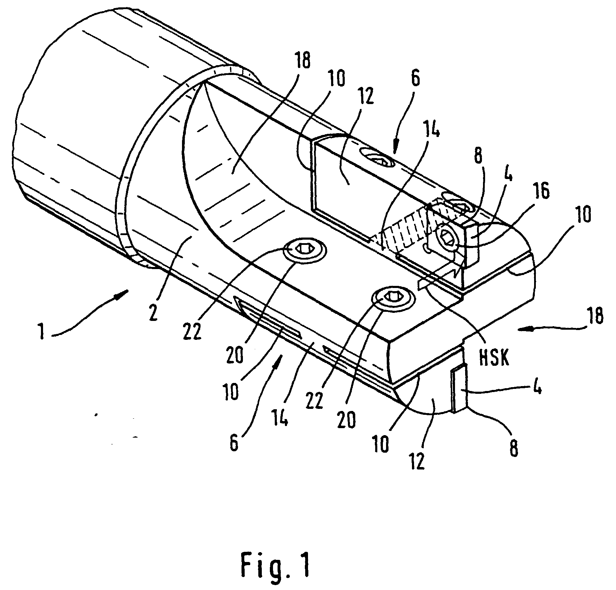

In Fig. 1 ist in vereinfachter Darstellung eine Ausführungsform des erfindungsgemäßen Werkzeugs 1 gezeigt. Am Schneidenträger 2 sind zwei Schneideinsätze 4 angeordnet. Eine Einstellvorrichtung 6 dient zur radialen Feinjustierung der Schneidkante 8 der Schneideinsätze 4. Der Schneidenträger 2 weist Schlitze 10 auf, die vom Schneidenträger 2 zwei Schneidenträgersegmente 12 abgrenzen. Die Schneidenträgersegmente 12 tragen jeweils einen Schneideinsatz 4 und sind in radialer Richtung einstellbar sowie einstückig mit dem Schneidenträger 2 über ein Material-Gelenk 14 verbunden. Die Schneideinsätze 4 sind mittels Schrauben 16 am jeweiligen Schneidenträgersegment 12 fixiert. Die Schlitze 10 verlaufen teilweise geradlinig in einer zur Achse des Werkzeugs 1 im wesentlichen parallelen Ebene. In der Spannut 18 sind Gewindebohrungen 20 angeordnet, die zur Aufnahme der Schrauben-/Mutter-Spanneinrichtungen 22 vorgesehen sind.

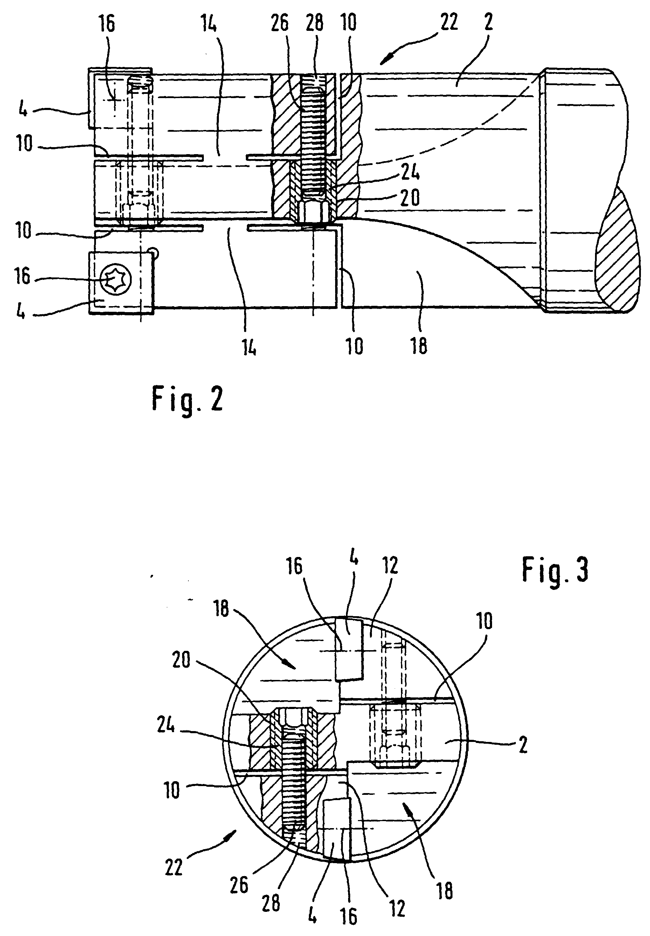

In Fig. 2 ist die Seitenansicht der ersten Ausführungsform gezeigt. In der Spannut 18 sind im Schneidenträger 2 Gewindebohrungen 20 angeordnet, in welche eine Gewindehülse 24 eingeschraubt ist. Ein Gewindestift 26 ist in eine im Schneidenträgersegment 12 angeordnete Gewindebohrung 28 eingeschraubt. Die Gewindebohrung 20 mit der Gewindehülse 24 und die Gewindebohrung 28 mit dem Gewindestift 26 wirken zusammen und bilden die Schrauben-/Mutter-Spanneinrichtung 22, wobei der Gewindestift 26 den Schlitz 10 überbrückt.

In Fig. 3 ist die Frontansicht der ersten Ausführungsform dargestellt. Die parallel angeordneten, senkrecht zur Betrachtungsebene in Werkzeuglängsachsenrichtung verlaufenden Schlitze 10 trennen die Schneidenträgersegmente 12 teilweise vom Schneidenträger 2. Zwei radial gegenüberliegende Schneideinsätze 4 sind in die radial gegenüberliegenden Schneidenträgersegmenten 12 eingefügt und mittels der Schraube 16 fixiert. Der Gewindestift 26 überbrückt den Schlitz 10 und steht mit der Gewindehülse 24 in Eingriff, um den Schneideinsatz 4 radial zu justieren. Die Gewindebohrung 20 ist näherungsweise fluchtend bzw. konzentrisch zur Gewindebohrung 28 angeordnet, wobei die Gewindebohrungen in einer zur Stirnfläche des Werkzeugs 1 parallel gelegenen Ebene ungefähr senkrecht zum Schlitz 10 ausgerichtet sind.

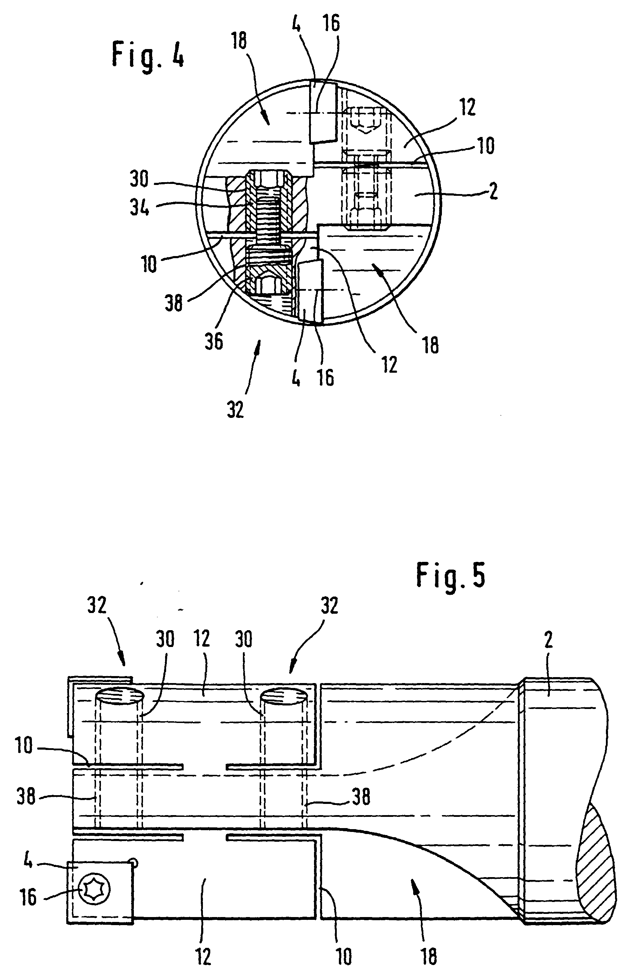

In Fig. 4 ist die Frontansicht einer zweiten Ausführungsform gezeigt. Die parallel angeordneten, senkrecht zur Betrachtungsebene in Werkzeuglängsachsenrichtung verlaufenden Schlitze 10 trennen die Schneidenträgersegmente 12 teilweise vom Schneidenträger 2. Zwei radial gegenüberliegende Schneideinsätze 4 sind in die radial gegenüberliegenden Schneidenträgersegmenten 12 eingefügt und mittels der Schraube 16 fixiert. Der gestufte Gewindestift 36 überbrückt den Schlitz 10 und steht mit der Gewindehülse 34 in Eingriff, um den Schneideinsatz 4 radial zu justieren. Die Gewindebohrung 30 ist näherungsweise fluchtend bzw. konzentrisch zur Gewindebohrung 38 angeordnet, wobei die Gewindebohrungen in einer zur Stirnfläche des Werkzeugs 1 parallel gelegenen Ebene ungefähr senkrecht zum Schlitz 10 ausgerichtet und als Durchgangsbohrung mit dem selben Gewinde ausgebildet sind.

In Fig. 5 ist die Seitenansicht der zweiten Ausführungsform vereinfacht dargestellt. In der Spannut 18 sind im Schneidenträger 2 Gewindebohrungen 30 angeordnet, in welche die nicht näher dargestellte Gewindehülse 34 eingeschraubt wird. Der nicht gezeigte gestufte Gewindestift 36 ist in eine im Schneidenträgersegment 12 angeordnete Gewindebohrung 38 eingeschraubt. Die Gewindebohrung 30 mit der Gewindehülse 34 und die Gewindebohrung 38 mit dem gestuften Gewindestift 36 wirken zusammen und bilden die Schrauben/Mutter-Spanneinrichtung 32, wobei der gestufte Gewindestift 36 den Schlitz 10 überbrückt. Die Gewindebohrung 30 und die Gewindebohrung 38 weisen das gleiche Gewinde auf und sind miteinander fluchtend als Durchgangsgewindebohrung ausgebildet.

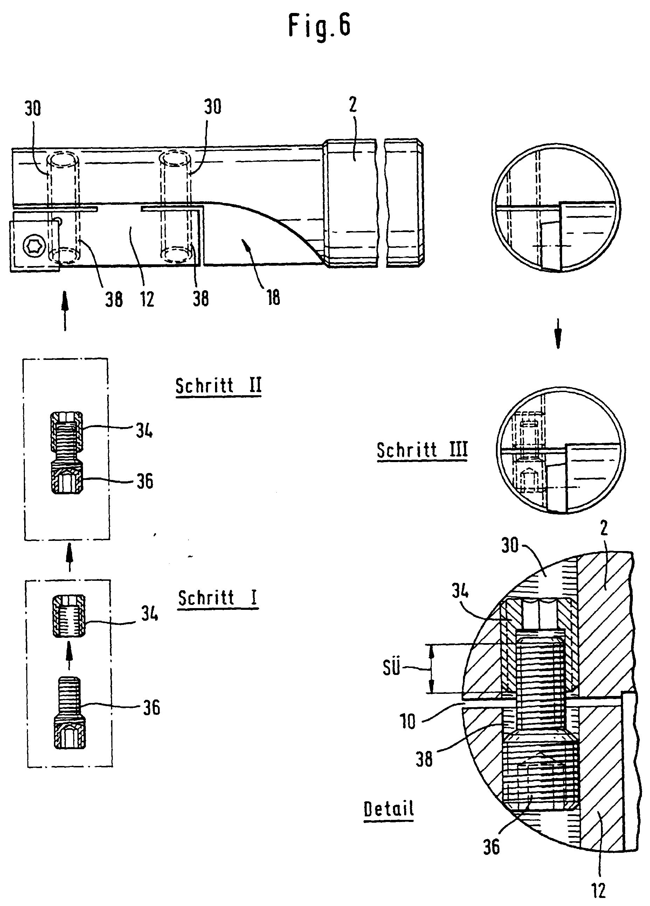

In Fig. 6 ist ein Ablaufplan für den teilweisen Zusammenbau der zweiten Ausführungsform des Werkzeugs 1 gezeigt. Im ersten Schritt wird der gestufte Gewindestift 36 in die Gewindehülse 34 geschraubt, vorzugsweise mit einem gewissen Restspiel des Gewindeeingriffs. Das so entstandene Paar aus Gewindehülse und gestuftem Gewindestift wird in und durch die Gewindebohrung 38 im Schneidenträgersegment geschraubt, bis die Gewindehülse 34 den Schlitz 10 erreicht hat. Nun wird zunächst durch Angriff von der gegenüberliegenden Seite durch die Gewindebohrung 30 hindurch die Gewindehülse 34 alleine weitergedreht, bis diese in Eingriff mit der Gewindebohrung 30 gebracht ist. Nun kann das Paar aus gestuftem Gewindestift 36 und Gewindehülse 34 zusammen durch Angriff von beiden Seiten axial weiter in der aus den Gewindebohrungen 30 und 38 gebildeten Durchgangsgewindebohrung bewegt werden, bis in einer Endlage der gestufte Gewindestift 36 den Schlitz 10 überbrückt und die Gewindehülse 34 im Schneidenträger 2 in der Gewindebohrung 30 in ihrer Endlage plaziert ist.

Durch die vorstehend beschriebene Montage befindet sich die Montageeinheit aus Gewindehülse und gestuftem Gewindestift im eingesetzten Zustand an beliebig gewünschter Stelle im kraftlosen Zustand. Dabei kann dieser kraftlose Zustand unabhängig davon erzielt werden, über welche Überlappungsstrecke SÜ der abgestufte Gewindeabschnitt in Funktionseingriff mit dem Innengewinde der Gewindehülse steht.

Wie am besten anhand der Detailansicht gemäß Fig. 6 gezeigt werden kann, ergibt sich mit der so montierten Stell- und Fixiereinheit der Vorteil, daß die Betätigung der Einstellvorrichtung in jedem Fall problemlos funktioniert, auch wenn das betreffende Werkzeug zum Antrieb der Einstellvorrichtung von der einen oder von der anderen Seite angesetzt wird. Wenn nämlich beispielsweise -gemäß der Detailansicht von Fig. 6- ein Werkzeug wie z. B. ein Innensechskantschlüssel von unten in den gestuften Gewindestift eingesetzt wird, und letzterer dann in Drehbewegung versetzt wird, bleibt die Gewindehülse im Teil 2 trotzdem in Ruhe, da das Reibmoment im Bereich des Gewindes kleineren Durchmessers kleiner ist als im Bereich des größeren Gewindedurchmessers an der Gewindehülse. Die Schlitzbreite 10 wird damit zuverlässig in einer bestimmten Sinnrichtung verändert.

Wenn umgekehrt ein Werkzeug von der anderen Seite, d. h. gemäß der Detailansicht von Fig. 6 von oben angesetzt wird, wird die Gewindehülse zunächst in Drehbewegung versetzt und läuft auf das kleinere Gewinde des gestuften Gewindestifts 36 auf. Der Gewindestift 36 dreht sich nicht mit, da die Reibkräfte zwischen Gewindehülse und kleinerem Gewinde des gestuften Gewindestifts 36 auf einem kleineren Radius wirksam werden, als die Gewindestützkraft im Kopf des gestuften Gewindestifts 36. Der besondere Vorteil besteht noch darin, daß eine gleiche Drehrichtung des angesetzten Werkzeugs unabhängig davon, von welche Seite das Werkzeug angesetzt wird, eine Verstellung der Schneide im gleichen Verstellsinn bewirkt.

Selbstverständlich sind Abweichungen von den beschriebenen Ausführungsformen möglich, ohne den Grundgedanken der Erfindung zu verlassen. Die Erfindung bietet Möglichkeiten, die Anordnung, die Lage und die Größe aber auch die Anzahl der Schlitze in weiten Grenzen zu variieren. Je nach Einsatzgebiet des Werkzeugs wird ein geeignetes Verhältnis zwischen Schneidenträgerquerschnitt und Schneidenträgersegmentquerschnitt gewählt. Die Schlitzbreite wird schließlich auch vom gewählten Verfahren für die Herstellung des Schlitzes beeinflußt. Von Vorteil ist hierbei das Drahterodierverfahren, mit dem es gelingt, durch die Wahl des Werkzeugs bereits in einem Arbeitsgang einen Schlitz geeigneter Breite zu erzeugen.

Auch die Lage des Dehngelenks bzw. der der elastischen Verformung unterworfenen Materialgelenks zwischen Schneidenträgersegment und Schneidenträger kann variiert werden, wobei vorzugsweise auf die Orientierung der Hauptschnittkraft Rücksicht genommen wird. Fig. 1 zeigt schematisch Verhältnisse für die Orientierung einer Hauptschnittkraft in einer Radialebene des Werkzeugs. Man erkennt, daß die Querschnittsfläche (gestrichelt schraffiert) des Dehngelenks im wesentlichen parallel zur Hauptschnittkraft HSK orientiert ist.

Die Erfindung schafft somit ein rundlaufendes Werkzeug 1, insbesondere ein spanabhebendes Werkzeug 1 zur Feinbearbeitung von Innenoberflächen, mit einem Schneidenträger 2 und daran vorzugsweise lösbar befestigten Schneideinsätzen 4, insbesondere DIN-Wendeschneidplatten, wobei eine Einstellvorrichtung 6 zur Feinjustierung der Schneidkante 8 vorgesehen ist, wobei der Schneidenträger 2 radial innerhalb des Schneideinsatzes 4 zumindest einen Schlitz 10 aufweist, wodurch ein den Schneideinsatz 4 tragendes im wesentlichen in radialer Richtung einstellbares Schneidenträgersegment 12 entsteht, das einstückig mit dem verbleibenden Schneidenträger 2 verbunden ist, wobei über die Einstellvorrichtung 6 der durch den Schlitz 10 gegebene Freiheitsgrad des Schneidenträgersegments 12 stabilisierbar ist.

## Patentansprüche

1. Rundlaufendes, spanabhebendes Werkzeug (1) zur Feinbearbeitung von Innenoberflächen, mit einem Schneidenträger (2) und mindestens einem daran vorzugsweise lösbar befestigten Schneideinsatz (4), insbesondere einer DIN-Wendeschneidplatte, wobei eine Einstellvorrichtung (6) zur Feinjustierung der Schneidkante (8) vorgesehen ist, und der Schneidenträger (2) radial innerhalb des Schneideinsatzes (4) eine im rundlaufenden Werkzeug (1) angeordnete Schlitzanordnung (10) aufweist, wodurch ein den Schneideinsatz (4) tragendes im wesentlichen in radialer Richtung einstellbares Schneidenträgersegment (12) entsteht, das einstückig mit dem verbleibenden Schneidenträger (2) verbunden ist, wobei über eine Einstell- und Fixiervorrichtung (6,) der durch die Schlitzanordnung (10) gegebene Freiheitsgrad des Schneidenträgersegments (12) stabilisierbar ist, **dadurch gekennzeichnet**, **daß** die Schlitzanordnung zwei Schlitze (10) aufweist, und daß das Schneidenträgersegment (12) über einen Materialsteg (14), der zwischen den beiden Schlitzen (10) verbleibt, einstückig mit dem Schneidenträger (2) verbunden ist, wobei die Einstell- und Fixiervorrichtung (6) so aufgebaut ist, daß das zwischen dem Schneidenträgersegment (12) und dem Schneidenträger (2) verbleibende Material-Gelenk (14) mittels zweier gegengerichteter Kraftvektoren stabilisierbar ist.

2. Rundlaufendes Werkzeug (1) nach Anspruch 1, dadurch gekennzeichnet, daß die Schlitzanordnung (10) geradlinig in einer zur Achse des rundlaufenden Werkzeugs (1) im wesentlichen parallelen Ebene verläuft.

3. Rundlaufendes Werkzeug (1) nach Anspruch 1 oder 2, dadurch gekennzeichnet, daß die Einstell- und Fixiervorrichtung (6) zumindest ein Justierelement und ein Fixierelement aufweist.

4. Rundlaufendes Werkzeug (1) nach Anspruch 3, dadurch gekennzeichnet, daß die Einstell- und Fixiervorrichtung (6) von einem Paar parallel angeordneter und axial gestaffelter Stellglieder (22) gebildet ist, deren Achsen vorzugsweise senkrecht zur Schlitzanordnung (10) verlaufen.

5. Rundlaufendes Werkzeug (1) nach Anspruch 4, dadurch gekennzeichnet, daß die Stellglieder (22) von Schrauben-/Mutter-Spanneinrichtungen (22) gebildet sind.

6. Rundlaufendes Werkzeug (1) nach Anspruch 5, dadurch gekennzeichnet, daß die Schrauben-/Mutter-Spanneinrichtungen (22) nach dem Differentialgewindeprinzip aufgebaut sind.

7. Rundlaufendes Werkzeug (1) nach Anspruch 6, dadurch gekennzeichnet, daß die Schrauben-/Mutter-Spanneinrichtungen (22) jeweils zweiteilig ausgebildet sind, wobei ein Gewindestift (26) mit einer ersten Gewindesteigung G1 im Schneidenträgersegment (12) sitzt, und eine Gewindehülse (24) mit einem Außengewinde G2 unterschiedlicher Steigung in Eingriff mit einem entsprechenden Innengewinde G2' des Schneidenträgers (2) und mit seinem Innengewinde G1' zur Einstellung der Schneiden über eine veränderbare Strecke in Eingriff mit dem Gewindestift (26) steht.

8. Rundlaufendes Werkzeug (1) nach Anspruch 6, dadurch gekennzeichnet, daß die Schrauben-/Mutter-Spanneinrichtungen (22) jeweils zweiteilig ausgebildet sind, wobei ein gestufter Gewindestift (36) mit seinem ersten Außengewinde G1 mit einer entsprechenden Gewindebohrung G1' im Schneidenträgersegment (12) zusammenwirkt, und mit seinem, vorzugsweise im Durchmesser kleineren, den Schlitz (10) überbrückenden zweiten Außengewinde G2 mit unterschiedlicher Steigung in Eingriff mit einem entsprechenden Innengewinde G2' einer in den Schneidenträger (2) einschraubbaren Gewindehülse (34) steht, wobei die zugehörige Gewindebohrung im Schneidenträger (2) mit einem identischen Gewinde G1' wie die Gewindebohrung im Schneidenträgersegment (12) fluchtend ausgebildet ist.

9. Rundlaufendes Werkzeug (1) nach einem der Ansprüche 1 bis 8, dadurch gekennzeichnet, daß die beiden Schlitze (10) wenigstens teilweise in einer gemeinsamen Ebene liegen, wobei jedem Schlitz (10) eine Einstellvorrichtung (6) zugeordnet ist.

10. Rundlaufendes Werkzeug (1) nach einem der Ansprüche 1 bis 9, dadurch gekennzeichnet, daß der Materialsteg (14) eine Querschnittsfläche aufweist, deren größere Erstreckung in Umfangsrichtung orientiert ist.

11. Rundlaufendes Werkzeug (1) nach einem der Ansprüche 1 bis 10, dadurch gekennzeichnet, daß die axiale Breite des Materialstegs (14) auf die mit der Einstellvorrichtung (6) aufzubringenden Kräfte abgestimmt ist.

12. Rundlaufendes Werkzeug (1) nach einem der Ansprüche 1 bis 11, dadurch gekennzeichnet, daß die Querschnittsfläche des Materialstegs (14) auf die in den Schneidenträger (2) einzuleitenden Schnittkräfte abgestimmt ist.

13. Rundlaufendes Werkzeug (1) nach einem der Ansprüche 1 bis 12, dadurch gekennzeichnet, daß die Schlitzanordnung (10) mittels Drahterodierverfahren hergestellt ist.

14. Rundlaufendes Werkzeug (1) nach einem der Ansprüche 1 bis 13, dadurch gekennzeichnet, daß die Schlitzanordnung (10) im wesentlichen in der Ebene einer Spannut (18) verläuft.

## Claims

1. A true-running, chip-removing tool (1) for fine machining of internal surfaces, comprising a bit holder (2) and at least one bit (4), more particularly a DIN reversible bit, fastened thereto preferably releasably, a means (6) being provided for fine adjustment of the cutting edge (8) and the bit holder (2) has a slot arrangement (10) disposed in the true-running tool (1) radially inside the bit (4), resulting in a bit-holder segment (12) which holds the bit (4), is adjustable substantially in the radial direction, and is integrally connected to the rest of the bit holder (2), the degree of freedom of the bit-holder segment (12) as determined by the slot arrangement (10) being stabilisable by an adjusting and fixing device (6), characterised in that the slot arrangement comprises two slots (10) and that the bit-holder segment (12) is integrally connected to the bit holder (2) by a web of material (14) left between the two slots (10), the adjusting and fixing device (6) being so constructed that the material joint (14) left between the bit-holder segment (12) and the bit holder (2) is stabilisable by two oppositely-directed force vectors.

2. A true-running tool (1) according to claim 1, characterised in that the slot arrangement (10) extends in a straight line in a plane substantially parallel to the axis of the true-running tool (1).

3. A true-running tool (1) according to claim 1 or 2, characterised in that the adjusting and fixing device (6) comprises at least one adjusting element and one fixing element.

4. A true-running tool (1) according to claim 3, characterised in that the adjusting and fixing device (6) is formed by of a pair of parallel and axially offset actuators (22), their axes preferably extending at right angles to the slot arrangement (10).

5. A true-running tool (1) according to claim 4, characterised in that the actuators (22) are in the form of screw/nut clamping devices (22).

6. A true-running tool (1) according to claim 5, characterised in that the screw/nut clamping devices (22) are constructed on the differential screwthread principle.

7. A true-running tool (1) according to claim 6, characterised in that the screw/nut clamping devices (22) are each in two parts, a threaded pin (26) with a first screwthread pitch (G1) being disposed in the bit-holder segment (12) and a threaded sleeve (24) with an outer thread (G2) of different pitch being in engagement with a corresponding inner thread (G2') of the bit holder (2) while its inner thread (G1') engages the threaded pin (26) over a variable distance in order to adjust the cutting edges.

8. A true-running tool (1) according to claim 6, characterised in that the nut/screw clamping devices (22) are each in two parts, a first outer thread (G1) of a stepped threaded pin (36) co-operating with a corresponding threaded bore G1' in the bit-holder segment (12) and a second outer thread G2 which bridges the slot (10) and preferably of smaller diameter and having a different pitch engages a corresponding inner thread G2' of a threaded sleeve (34) screwable into the bit holder (2), the associated threaded bore in the bit holder (2) being constructed in alignment with a thread G1' identical with that of the threaded bore in the bit-holder segment (12).

9. A true-running tool (1) according to any of claims 1 to 8, characterised in that the two slots (10) lie at least partly in a common plane, an adjusting device (6) being associated with each slot (10).

10. A true-running tool (1) according to any of claims 1 to 9, characterised in that the web (14) has a cross-sectional surface whose maximum extension is oriented in the peripheral direction.

11. A true-running tool (1) according to any of claims 1 to 10, characterised in that the axial width of the web (14) is adapted to the forces applied by the adjusting device (6).

12. A true-running tool (1) according to any of claims 1 to 11, characterised in that the cross-sectional area of the web (14) is adapted to the cutting forces introduced into the bit holder (2).

13. A true-running tool (1) according to any of claims 1 to 12, characterised in that the slot arrangement (10) is produced by wire erosion processes.

14. A true-running tool (1) according to any of claims 1 to 13, characterised in that the slot arrangement (10) extends substantially in the plane of a groove (18) for chips.

## Revendications

1. Outil rotatif (1) travaillant par enlèvement de copeaux pour l'usinage fin de surfaces intérieures, comportant un porte-lame (2) et au moins une garniture de coupe (4) fixée de préférence de manière amovible à ce dernier, notamment une plaquette de coupe réversible DIN, un dispositif de réglage (6) étant prévu pour l'ajustage fin de l'arête de coupe (8) et le porte-lame (2) présentant radialement à l'intérieur de la garniture de coupe (4), un ensemble de fentes (10) disposées dans l'outil rotatif (1), ce qui fait qu'il se forme un segment de porte-lame (12) qui porte la garniture de coupe (4), qui est réglable sensiblement dans la direction radiale et qui est reliée d'une seule pièce au porte-lame (2) restant, le degré de liberté du segment porte-lame (12), donné par l'ensemble de fentes (10), pouvant être stabilisé au moyen d'un dispositif de réglage et de fixation (6), caractérisé en ce que l'ensemble de fentes présente deux fentes (10) et en ce que le segment porte-lame (12) est relié d'une seule pièce au porte-lame (2) par une entretoise de matière (14) qui reste entre les deux fentes (10), le dispositif de réglage et de fixation (6) étant construit de manière que l'articulation de matière (14) qui reste entre le segment porte-lame (12) et le porte-lame (2), puisse être stabilisé au moyen de deux vecteurs de force de sens opposés.

2. Outil rotatif (1) selon la revendication 1, caractérisé en ce que l'ensemble de fentes (10) s'étend en ligne droite dans un plan sensiblement parallèle à l'axe de l'outil rotatif (1).

3. Outil rotatif (1) selon la revendication 1 ou 2, caractérisé en ce que le dispositif de réglage et de fixation (6) présente au moins un élément d'ajustage et un élément de fixation.

4. Outil rotatif (1) selon la revendication 3, caractérisé en ce que le dispositif de réglage et de fixation (6) est formé par une paire d'organes de réglage (22) disposés parallèlement et échelonnés dont les axes sont de préférence perpendiculaires à l'ensemble de fentes (10).

5. Outil rotatif (1) selon la revendication 4, caractérisé en ce que les organes de réglage (22) son formés par des dispositifs de serrage à vis et écrou (22).

6. Outil rotatif (1) selon la revendication 5, caractérisé en ce que les dispositifs de serrage à vis et écrou (22) sont conçus suivant le principe du filetage différentiel.

7. Outil rotatif (1) selon la revendication 6, caractérisé en ce que les dispositifs de serrage à vis et écrou (22) sont réalisés chacun en deux parties, une tige filetée (26) avec un premier pas de filetage G1 se trouvant dans le segment porte-lame (12), et une douille filetée (24) avec un filetage extérieur G2 de pas différent étant en prise avec un taraudage G2' correspondant du porte-lame (2) et avec son taraudage G1' pour le réglage des lames sur une distance variable en engagement avec la tige filetée (26).

8. Outil rotatif (1) selon la revendication 6, caractérisé en ce que les dispositifs de serrage à vis et écrou (22) sont réalisés chacun en deux parties, une tige filetée étagée (36) coopérant par son premier filetage extérieur G1 avec un trou taraudé G1' correspondant pratiqué dans le segment porte-lame (12) et qui est en prise, par son deuxième filetage extérieur G2 de pas différent, de diamètre de préférence plus petit et qui ponte la fente (10), avec un taraudage G2' correspondant d'une douille filetée (34) qui peut être vissée dans le porte-lame (2), le trou taraudé correspondant pratiqué dans le porte-lame (2) étant réalisé en alignement avec un filetage G1' identique à celui du trou taraudé dans le segment porte-lame (12).

9. Outil rotatif (1) selon l'une des revendications 1 à 8, caractérisé en ce que les deux fentes (10) se situent au moins en partie dans un plan commun, à chaque fente (10) étant affecté un dispositif de réglage (6).

10. Outil rotatif (1) selon l'une des revendications 1 à 9, caractérisé en ce que l'entretoise de matière (10) présente une surface de section transversale dont la plus grande longueur est orientée dans la direction périphérique.

11. Outil rotatif (1) selon l'une des revendications 1 à 10, caractérisé en ce que la largeur axiale de l'entretoise de matière (4) est adaptée aux forces à appliquer au moyen du dispositif de réglage (6).

12. Optil rotatif (1) selon l'une des revendications 1 à 11, caractérisé en ce que la surface de section transversale de l'entretoise de matière (14) est adaptée aux forces de coupe à introduire dans le porte-lame (2).

13. Outil rotatif (1) selon l'une des revendications 1 à 12, caractérisé en ce que l'ensemble de fentes (10) est réalisé par un procédé d'étincelage par fil.

14. Outil rotatif (1) selon l'une des revendications 1 à 13, caractérisé en ce que l'ensemble de fentes (10) s'étend sensiblement dans le plan d'une rainure à copeaux (18).
